# EUROPEAN PATENT APPLICATION

(11) **EP 0 786 394 A1**
(43) Date of publication of application: **30.07.1997**
(21) Application number: 97100704.2
(22) Date of filing: 17.01.1997
(51) Int. Cl.: B62D 13/04, B62D 7/14

(54) **Improvement to a power-assisted steering system for the steerable wheels of one or more rear axles of a vehicle such as a truck or semitrailer**

(30) Priority: 24.01.1996 IT BO960027
(71) Applicant: R.C.D. S.r.l., 40069 Zola Predosa (Bologna) (IT)
(72) Inventor: Biondi, Armando, 40010 Sala Bolognese (Prov. of Bologna) (IT)
(74) Representative: Modiano, Guido, Dr.-Ing.

(57) **Abstract**

In a power-steering system for steering the wheels of one or more rear axles of a truck or semitrailer, a hydraulic actuator (89) acts on the rear steerable wheels (38,39) and is connected to a hydraulic-pressure source (143) or to the vehicle pneumatic circuit. The angle of the kingpin or of the frontwheels (1,2) is transmitted hydraulically from jack (29) to jack (37) or mechanically through levers and cables (120-124) to distribution unit (88).

## Description

The present invention relates to an improvement to a power-assisted steering system for the steerable wheels of one or more rear axles of a vehicle such as a truck or semitrailer.

It is known that trucks equipped with power-assisted steering and with one or more rear axles in which one axle has steerable wheels are currently commercially available.

Vehicles composed of a semitrailer connected to a hauling vehicle are also known. The semitrailer rests, with the front part of its loading platform, on a power chassis (tractor) having a flat articulation and coupling surface (fifth wheel) for a pivot which protrudes downwards from the loading platform. The rear part of the semitrailer rests on the ground by means of two or more rear axles, one or more whereof have steerable wheels.

Italian patent applications no. BO92A000327 and BO92A000029 and European patent application no. 95117682.8 disclose systems for steering and locking one or more rear axles provided with steerable wheels for trucks and semitrailers.

A principal aim of the present invention is to improve these conventional steering and locking systems so as to make them constructively simpler and functionally more adapted to follow the technological development of the vehicles.

This aim is achieved by means of an improvement to a power-assisted steering system for the steerable wheels of one or more rear axles of a truck or semitrailer the characteristics whereof are defined in the appended claims.

Further characteristics and advantages of the invention will become apparent from the following detailed description thereof, on the basis of the accompanying drawings, wherein:
figure 1 is a plan view of a rear axle of a semitrailer or truck provided with steerable wheels;
figure 2 is a front view of the axle of figure 1;
figure 3 is a sectional view, taken along the plane III-III of figure 1;
figure 4 is a diagram of a system according to the invention, applied to a semitrailer with a plurality of steerable axles structured according to figures 1 to 3;
figure 5 is a sectional view, taken along the plane V-V of figure 4;
figure 6 is a sectional view, taken along the plane VI-VI of figure 5;
figure 7 is an electrical diagram for controlling the system of figure 4;
figure 8 is a partial enlarged-scale view of the system of figure 4;
figures 9-13 are views of some different embodiments of the invention, applied to a semitrailer with a plurality of axles with steerable wheels;
figures 14-19 are views of further embodiments of the invention applied to a truck;
figures 20-26 are views of different embodiments introduced in the oleo circuit.

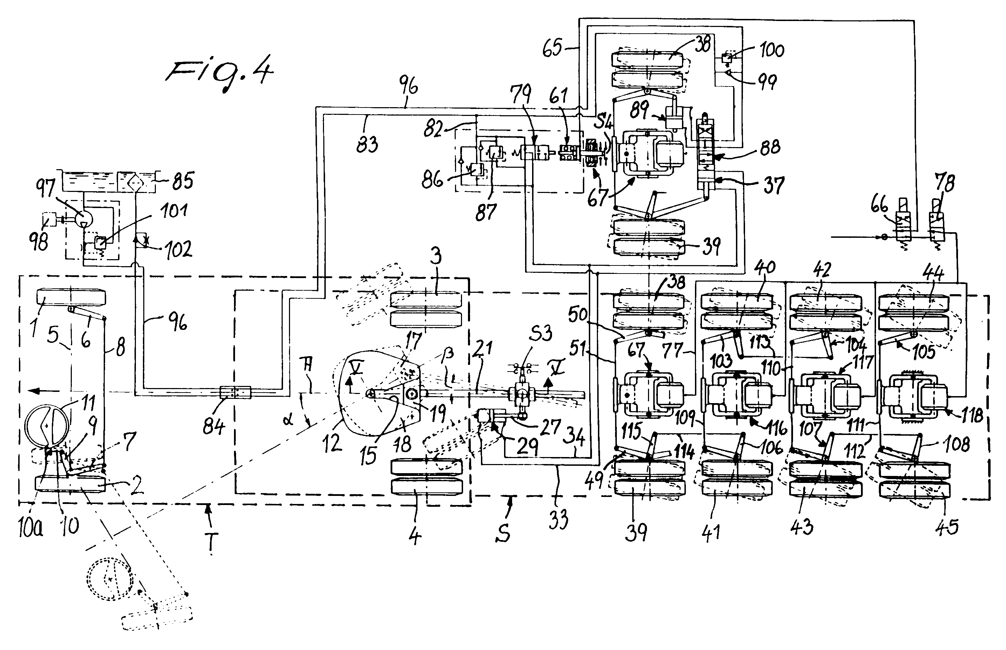

With reference to the above figures 4 to 8, the reference numerals 1 and 2 designate the two primary steering wheels and the reference numerals 3 and 4 designate the two rear wheels of the tractor T of a vehicle of the type known as tractor-semitrailer rig, i.e., which comprises a semitrailer S that is articulated to the tractor and has a longitudinal axis A.

The wheels 1 and 2 are mounted on an axle 5 so that they can be orientated and can be steered by means of a parallelogram composed of two arms 6 and 7 articulated to each other by a transverse bar 8. A second arm 9 is rigidly coupled to the arm 7 and, by means of a traction element 10, is connected to the actuation lever 10a of a conventional hydraulic power-assisted steering system which is capable of producing, when the steering wheel 11 is actuated, the oscillation of the lever 10a and, by means of the arms 6 and 7 and the bar 8, the steering of the wheels 1 and 2 in one direction or the other.

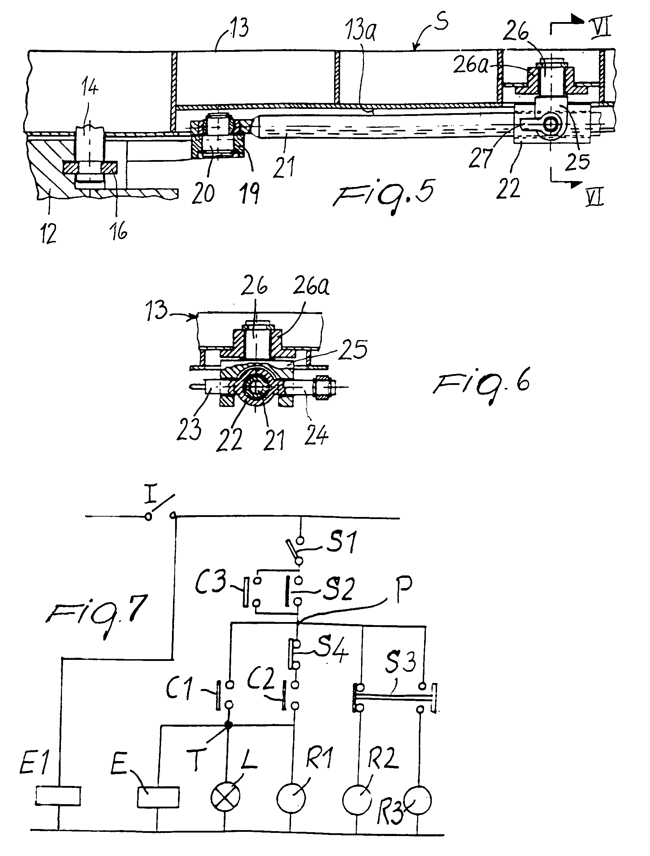

The tractor T is provided with a fifth wheel 12 which is oscillatably supported, in order to allow the resting and coupling of the front end of the loading platform 13 (figure 5) of the semitrailer S.

The oscillating movement of the fifth wheel 12, however, is preset so that said fifth wheel cannot turn about a vertical axis with respect to the tractor.

The coupling between the tractor T and the semitrailer S is provided by means of a pivot 14 which protrudes downwards from the platform 13 and engages a seat 15 of the fifth wheel 12, whereto it is fixed by means of keys 16.

The seat 15 widens in a V-like shape towards the rear of the tractor, so as to form two tails 17 and 18 between which a connecting cross-member 19 lies. A cylindrical rod 21 (hereinafter termed strut) is articulated at the center of the cross-member 19 by means of a pivot 20, and a sleeve 22 (figure 6) is guided on said rod and has two cylindrical tangs 23 and 24 which are aligned at right angles to the axis of the strut. The prongs of a fork 25 are articulately connected to the tangs 23 and 24, and said fork is provided in an upward region with a vertical pivot 26, whereby it is rotatably supported in a bush 26a of the platform 13. The strut 21 is accommodated in a recess 13a formed below the platform 13 so as to not protrude from said platform.

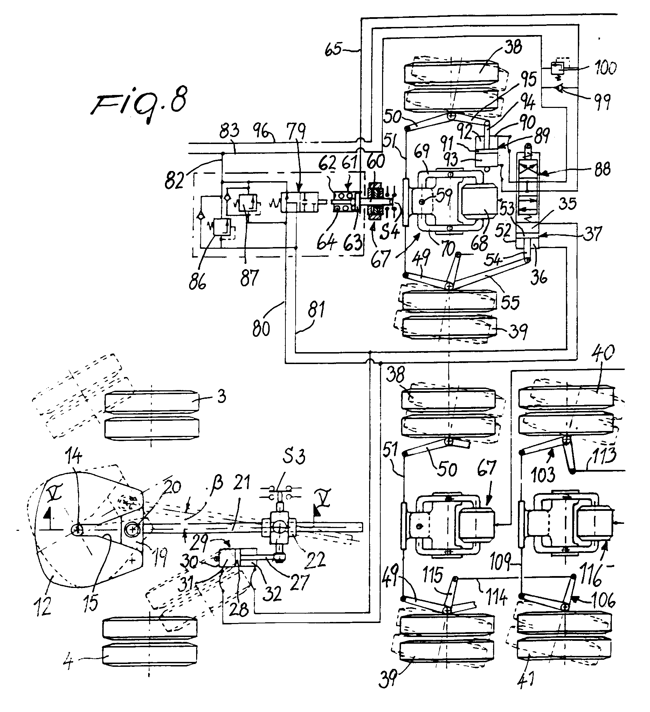

The tang 24 continues through the respective prong of the fork 25 so as to form an arm for connection to the stem 27 of a piston 28 (figure 8) of a double-action oleo jack 29, the cylinder 30 whereof is articulately fixed below the platform 13.

The piston 28 divides the compartment of the cylinder 30 into two chambers 31 and 32, from which two ducts 33 and 34 branch off for connection to the respective chambers 35 and 36 of a second double-action oleo jack 37 to provide the orientation of the pair of rear steerable wheels 38 and 39 whereby the semitrailer rests on the ground together with other pairs of wheels 40, 41; 42, 43; 44, 45, which are also steerable.

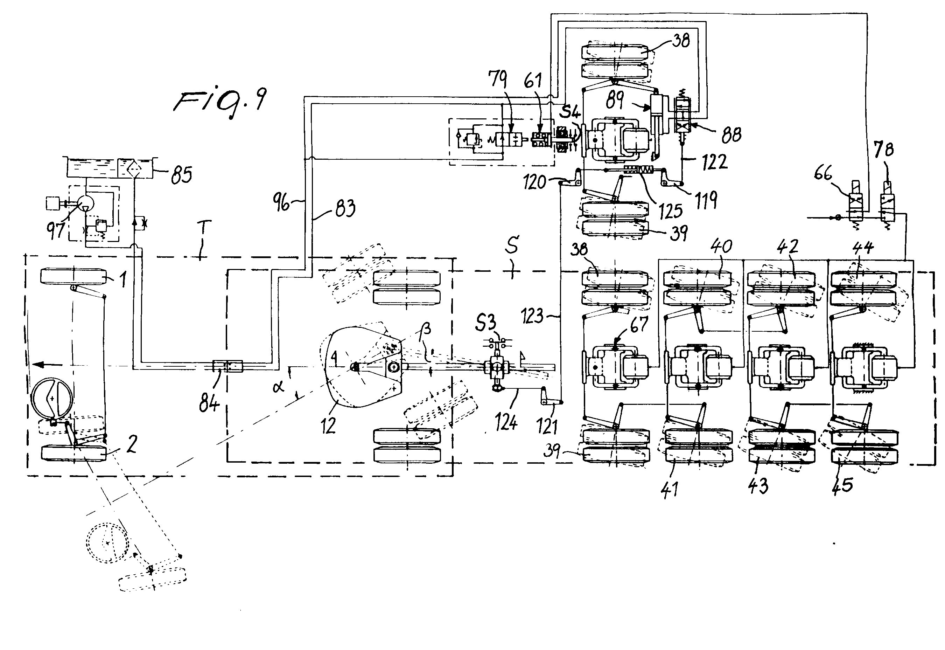

It should be noted that for the sake of clarity, the wheels 38 and 39, the corresponding locking and centering devices, and the corresponding steering parallelograms have been shown twice in figures 4, 8 and in the subsequent figures 9-13: once together with the other wheels 40-45 and a second time in a separate position.

Steering of the rear wheels 38 and 39 is actuated when the longitudinal axis of the tractor T, as a consequence of the steering of the primary steering wheels 1 and 2, no longer coincides with the axis of the semitrailer S. The steering angle of the rear wheels is therefore a function of the angle that forms between the longitudinal axis of the tractor T and the axis of the semitrailer S and of the volumetric proportion of the jacks 29 and 37 and of the corresponding lever arms.

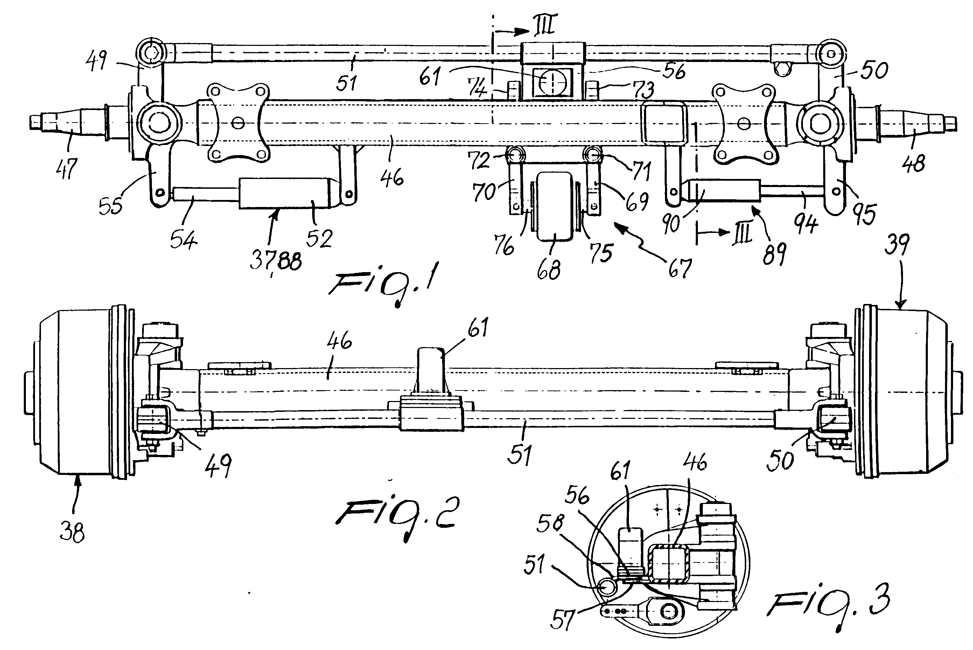

In the illustrated example, the wheels 38 and 39 are arranged in front of the pairs of steerable wheels 40-45 and are mounted so that they can be steered on an axle constituted (figures 1-3) by a tubular beam 46, at the opposite ends whereof the pivots 47 and 48 that rotatably support the wheels 38 and 39 are articulated about vertical axes.

Two respective arms 49 and 50 (figures 1, 4, and 8) are rigidly coupled to the supporting pivots 47 and 48 of the wheels 38 and 39 and are interconnected by a bar 51 which forms therewith the steering parallelogram of the wheels 38 and 39. The cylinder 52 of the jack 37 is coupled to the beam 46 and its piston 53 separates the chambers 35 and 36 from one another and is connected, by means of the stem 54, to a lever 55 which is rigidly coupled to the arm 49.

Two rectangular plates 56 and 57 (figure 3) are fixed to the beam 46 and protrude horizontally towards the bar 51; a gap remains between said plates, and a third plate 58, rigidly coupled to the bar 51, protrudes into said gap.

The plate 58 has the same dimensions as the plates 56 and 57 and remains in sliding engagement between them when the steering parallelogram is moved to the right or to the left.

Respective holes 59 (see figure 8) are formed in the plates 56, 57, 58 (hereinafter referenced to as 56-58 for the sake of brevity); said holes have the same diameter and are such as to mutually align when the wheels 38 and 39 are co-planar to the wheels 40-45, i.e., during the straight-line motion of the vehicle.

In this position, the holes 59 of the plates 56-58 can be engaged by a stem 60 which constitutes the key of a locking device which comprises a pneumatic jack generally designated by the reference numeral 61. It should be noted that in figure 8, for the sake of clarity, the plates 56-58 are shown not only in plan view but also in cross-section and are crossed by the stem 60 that engages their holes 59. The stem 60 is guided so that it passes axially through the cylinder 62 of the jack 61 and has a piston 63 rigidly coupled thereto, said piston dividing the cylinder into two chambers.

One of said chambers accommodates a spring 64, which acts on the piston 63 so as to actuate the stem 60 towards the plates 56-58. The opposite chamber of the cylinder 62 is connected to the compressed-air system of the vehicle by means of a duct 65 and an electric valve 66.

The alignment of the plates 56-58, which is required in order to allow the engagement of the stem 60, is provided with the aid of a centering device 67 (see figure 1 in particular), which is composed of a pneumatic-expansion jack 68 and of two levers 69 and 70, which are pivoted in a rocker-like manner on pivots 71 and 72 mounted on the beam 46.

The levers have two jaw-shaped ends 73 and 74, between which the plates 56-58 are interposed, and two opposite ends which are articulately rigidly coupled to the stems 75, 76 of the jack 68.

The expansion jack 68 can be connected to the compressed-air system of the vehicle by means of a duct 77 and the electric valve 78 associated with the electric valve 66. In this manner, by activating the jack 68, the jaws 73 and 74 tighten on the plates 56-58, leveling them off laterally in the position for aligning the holes 59 for the insertion of the stem 60.

The movement of the stem 60 is combined with the movement of a two-position distribution unit 79, which has two inlets connected by ducts 80 and 81 to the ducts 33 and 34 that connect the chambers 31, 32 and 35, 36 and an outlet that is connected to a duct 82 which leads into a duct 83 which leads to a reservoir 85 by means of a hydraulic coupling 84.

In one of these positions, which corresponds to the position in which the stem 60 is disengaged from the holes 59 of the plates 56-58, the distribution unit 79 disconnects the ducts 80, 81, and 82, whilst in the other position it provides for the connection between the ducts 33 and 34 and the duct 82 and therefore the reservoir 85.

The reference numerals 86 and 87 designate two pressure limiting valves, the inlets whereof are connected to the ducts 80 and 82 and the outlets whereof lead into the duct 82.

An oleo distribution unit 88 with two inlets and three positions is operatively associated with the jack 37 and is preset to control an oleo jack 89, having the purpose of applying the steering thrust to the wheels.

The jack 89 is of the double-action type too and comprises a cylinder 90, which is coupled to the beam 46, and a piston 91, which divides the cylinder 90 into two chambers 92 and 93. The piston 91, by means of the stem 94, is connected to an arm 95 rigidly coupled to the pivot 48.

By means of the distribution unit 88, the chambers 92 and 93 of the jack 89 are selectively connected to the duct 83 (and therefore to the reservoir 85) and to a duct 96, which is connected to the delivery of an auxiliary feeder pump 97 across the coupling 84.

The pump 97, which draws from the reservoir 85, is actuated by a motor 98, which can be the motor of the vehicle or an independent (internal-combustion or electric) motor. The reference numerals 99 and 100 respectively designate an anti-cavitation valve and a pressure limiting valve, which are arranged between the delivery duct 96 and the return duct 83.

Additional pressure and counterpressure adjustment valves 101 and 102 are arranged along the duct 96 and along the duct 83 respectively.

The distribution unit 88 is capable of assuming three positions, according to the pressure conditions occurring in the chambers 35-36. In the neutral position, which occurs when the pressures in the chambers 35, 36 are equal and is shown in figure 8, the duct 96 is directly connected to the discharge duct 83. In each one of the other two positions, the distribution unit 88 allows to feed the pressurized oil into the chamber 92 or 93, producing a thrust of the jack 89 which matches that of the jack 37 to cause the steering of the wheels 38, 39. The thrust for steering the wheels 38, 39 is transmitted mechanically also to the wheels of the other rear axles, so as to produce the simultaneous steering of all the wheels.

Respective levers 103, 104, and 105 are rigidly coupled to the supporting pivots of the wheels 40, 42, and 44; the levers corresponding to the wheels 40 and 42 have two arms arranged in an L-shaped configuration.

Likewise, respective levers 106, 107, and 108, with two arms arranged in an L-shaped configuration and mirror-symmetrical with respect to the levers 103, 104, and 105, are rigidly coupled to the supporting pivots of the wheels 41, 43, and 45.

The levers 103-105 have an arm which is parallel to the arm 50 of the wheel 38, whilst the levers 106-108 have an arm which is parallel to the arm 49. Said arms of each axle are interconnected by transverse bars 109, 110, and 111, which are similar to the bar 51, i.e., perpendicular to the longitudinal axis A of the vehicle.

The second arms of the levers 103, 104 and 105-108 (the lever 105 does not have a second arm) protrude towards the axis A and are connected in pairs by longitudinal bars 112-114. In particular, the bar 112 connects the levers 107, 108 of the wheels 43 and 45, the bar 113 connects the levers 103, 104 of the wheels 40 and 42, and the bar 114 connects the lever 104 of the wheel 41 to an arm 115 which is rigidly coupled to the pivot for supporting the wheel 39.

From the above description it is evident that when the jacks 37 and 89 are actuated, all the wheels 38-45, by virtue of the linkage provided by the bars 51, 109-111, and by the levers 49-50, 103-108, and 115, and by the bars 112-114, are orientated in the same direction.

Conveniently, the length of the arms of the levers is chosen so that the orientation of the wheels increases gradually from the forward wheels 38, 39 towards the rearmost ones 44, 45.

Centering devices 116, 117, and 118, fully similar to the device 67, are associated with the wheels 40-45 as well and comprise pneumatic jacks which are connected to the same duct 77 that feeds the jack 68.

Figure 7 illustrates the electrical diagram of the electromechanical elements meant to control the system. In this diagram, R1, R2, and R3 designate three relays which are parallel-connected to each other, to an indicator lamp L, and to the solenoid E that drives the electric valve 66. The three relays, the indicator lamp, and the solenoid can be connected to the power supply voltage by means of a plurality of contacts and selectors. Moreover, by closing the ignition key, represented by the switch I, the solenoid E1 that actuates the electric valve 78 is energized.

More particularly, S1 designates a selector, controlled by the vehicle driver, for the activation and deactivation of the steering system of the rear steerable wheels 38-45. A selector S2 is arranged in series to the selector S1 and is controlled by the speedometer of the vehicle, allowing the steering of the rear wheels 38, 45 up to a preset speed limit, which is set to 50 km/h by current statutory provisions. The contact C3 of the relay R3 is arranged in parallel to the selector S2 and the selector S4 is series-connected; by detecting the position of the stem 60, said selector S4 checks the centering conditions of the rear steerable wheels and checks their locking in the straight travel position. The contact C2 of the relay R2 is arranged in series to the selector S4.

The relays R2 and R3 can be connected alternately to the point P between the selectors S2 and S4 by means of a selector S3 for selecting the position of the strut 21 and for therefore detecting the travel direction of the vehicle. In particular, in the straight travel condition, the selector S3 engages the relay R2, whilst in the off-center condition the selector S3 cuts out the relay R2 and presets the activation of the relay R3. The contact C1 of the relay R1 is arranged between the point P and the point T for the connection of the solenoid E, of the lamp L, and of the relay R1.

The operation of the described system is as follows.

When the driver wishes to engage power-assisted steering of the rear wheels 38-45, he closes the selector S1; since the selector S2 remains engaged so long as the speed remains below the preset limit (50 km/h), the relay R2 is therefore energized by means of the selector S3, assuming that the vehicle is in a straight travel position, and said relay R2 closes the contact C2. Since the stem 60 is assumed to be engaged in the position for locking the rear steerable wheels, the selector S4 is closed and therefore the relay R1 is energized, causing the closure of the contact C1. In this manner, whilst the relay R1 remains self-locked, the solenoid E is energized, actuating the movement of the electric valve 66 (the electric valve 78 is kept actuated from the moment when the ignition key I is inserted) into the position in which the jack 68 of the device 67 and the jacks of the devices 116-118 are connected to the discharge and the compressed air is sent to the jack 61, causing the disengagement of the stem 60 from the plates 56-58 and the release of the bar 51 from the axle 46.

The stem 60, by protruding axially on the opposite side of the cylinder 62 of the jack 61, acts on the distribution unit 79, which is shifted into the position for closing the ducts 80 and 81, so as to provide a closed-circuit connection between the chambers 31 and 32 of the jack 29 and the respective chambers 35 and 36 of the jack 37.

As long as the vehicle travels in a straight path, the distribution unit 88 remains in the neutral position and the oil fed by the pump 97 is discharged directly into the reservoir 85.

When the tractor T starts to lose alignment with respect to the semitrailer S (angle α), the pivot 20 of the strut 21 traces a circular path around the pivot 14 which causes an angular movement thereof with respect to the axis of the semitrailer S and therefore the rotation of the fork 25 about the axis of the pivot 26 (angle β). In this manner, the tang 24, by acting on the piston 28 of the jack 29, pushes the oil into the chamber 35 or 36 of the jack 37.

The relative pressure increase between the chambers 35 and 36 causes a corresponding movement of the distribution unit 88 into the position in which the delivery of the pump 97 is connected to only one of the chambers 92 and 93 of the jack 89, i.e., to the chamber that produces, on the wheels 38 and 39, an action of the jack 89 which matches that of the jack 37. For example, if there is an increase in the pressure in the chamber 31 of the jack 29 as a consequence of a leftward steering of the tractor T, as shown in dashed lines in Figure 4, this increase is transmitted to the chamber 35, causing a displacement of the distribution unit 88 in the direction in which the delivery duct 96 of the pump 97 is connected to the chamber 92. In this manner, the steering thrust on the wheels is provided by the jack 89, whilst the jacks 29-37 act as control sensors.

It should be noted that rear wheel steering remains active as long as the speed of the vehicle does not exceed the intended limit (50 km/h). As soon as this speed is exceeded, assuming that the vehicle is traveling in a straight line, the selector S2 in fact opens and the solenoid E is de-energized, so that the electric valve 66 connects the jack 61 to the discharge, connecting the cylinders 68 to compressed-air source. The connection of the jack 61 to the discharge allows the stem 60 to engage the hole 59 of the plate 56 with the holes of the underlying plates 57 and 58, using the action for aligning the plates 56-58 which is produced by the jaws 73 and 74 of the levers 69 and 70. The wheels 38 and 39 are thus locked in centered position and so are the wheels 40, 45 by means of the lever system 103-111.

Through the movement of the stem 60 so as to engage the holes 59 of the plates 56-58, the distribution unit 79 assumes the position for connecting the ducts 33 and 34 to the duct 82, so that the oil expelled from the chambers 31 and 32 during the steering of the tractor T can flow back into the reservoir 85. It should be noted that when the vehicle travels along a curved path while its rear wheels are steering, the selector S3, actuated by the strut 21, reaches the position for energizing the relay R3, whilst the relay R2 is de-energized. The de-energization of R2 and the consequent opening of the contact C2 has no effect, since the solenoid E, the indicator lamp L, and the relay R1 remain energized by means of C1. The energization of the relay R3 closes the contact C3 and therefore allows to short-circuit the selector S2 throughout the period during which the vehicle travels along a curved path. In this manner, should the selector S2 open during travel along a curved path and when the intended speed is exceeded, the consequent centering and locking of the bar 51 in centered position is prevented from causing trajectory variations and sudden swerving in the control of the vehicle. Therefore, the engagement and disengagement of the power-assisted steering of the rear wheels occurs always and only when the tractor and the semitrailer are aligned during straight-line travel.

It is evident that the invention perfectly achieves the intended aim and objects. The fact that the vehicle onboard pneumatic system is used to lock the rear steerable wheels, so as to provide considerable constructive simplification, is particularly significant.

The described system is susceptible of numerous modifications and variations, all of which are within the scope of the same inventive concept. The embodiment illustrated in figure 9 (in which the same reference numerals designate parts and elements which are identical or similar to those of figures 1 to 8) provides for the adoption of a system in which the rear steerable wheels 38 and 39 are not actuated by means of a power-assisted hydrostatic-drive circuit (such as the one formed by the jacks 29 and 37 and by the ducts 33 and 34 in figures 4 and 8, which by means of a hydrostatic actuation transmits the angular position of the rotation of the tractor T with respect to the semitrailer S) but by using an independent power-assisted circuit with mechanically-driven actuation.

In order to control the jack 89, the distribution unit 88 is mounted within the cylinder of said jack 89. The distribution unit 88 has a slide valve which, by means of rocker transmission levers 119, 120, and 121, flexible-cable traction elements 122, 123, and 124, and a spring expansion device 125 arranged between the levers 119 and 120, is connected to the tang 24 of the sleeve 22. The expansion device 125 allows to actuate the traction elements when the rocker lever 119, together with the jack 89, is locked in the condition in which the wheels are locked at the center, which is provided when the set speed is exceeded. When the steerable rear wheels 38 and 39 are released, the rotation of the tractor T with respect to the semitrailer S causes, by means of the levers 119, 120, and 121, the cables 122, 123, and 124, and the expansion device 125, a displacement of the slide valve of the distribution unit 88 on the side whereon the feeding of oil to the jack 89 causes a corresponding steering effect of the wheels 38-45.

When the steerable rear wheels 38-45 are centered and locked, the distribution unit 88 is in such a position as to connect the supply of the pump 97 to the reservoir 85.

As regards the rest, the operating method of the system is within the scope of the above description.

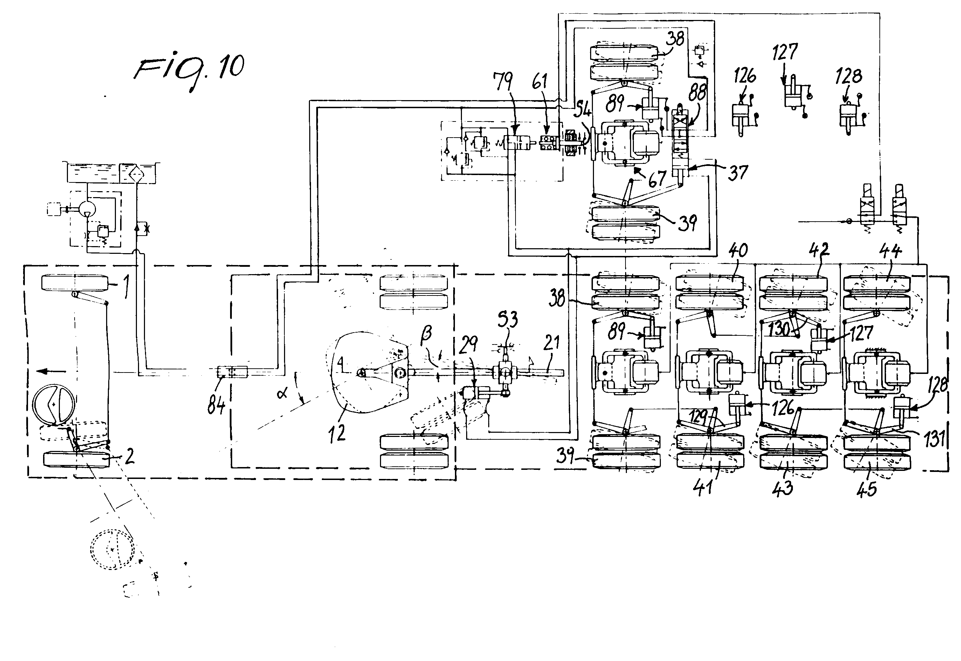

Figure 10 illustrates an embodiment, with respect to the above-described figure 4, which provides for the power-assisted actuation of the rear wheels 38-45 by using a jack for each steerable axle, so that the jacks 126, 127, and 128 are parallel-connected to the jack 89 and act on levers 129, 130, and 131 which are rigidly coupled to the supporting pivots of the wheels 41, 42, and 45. All the auxiliary jacks 89 and 126-128 are controlled by the distribution unit 88, so as to act simultaneously to actuate the steerable wheels 38-45.

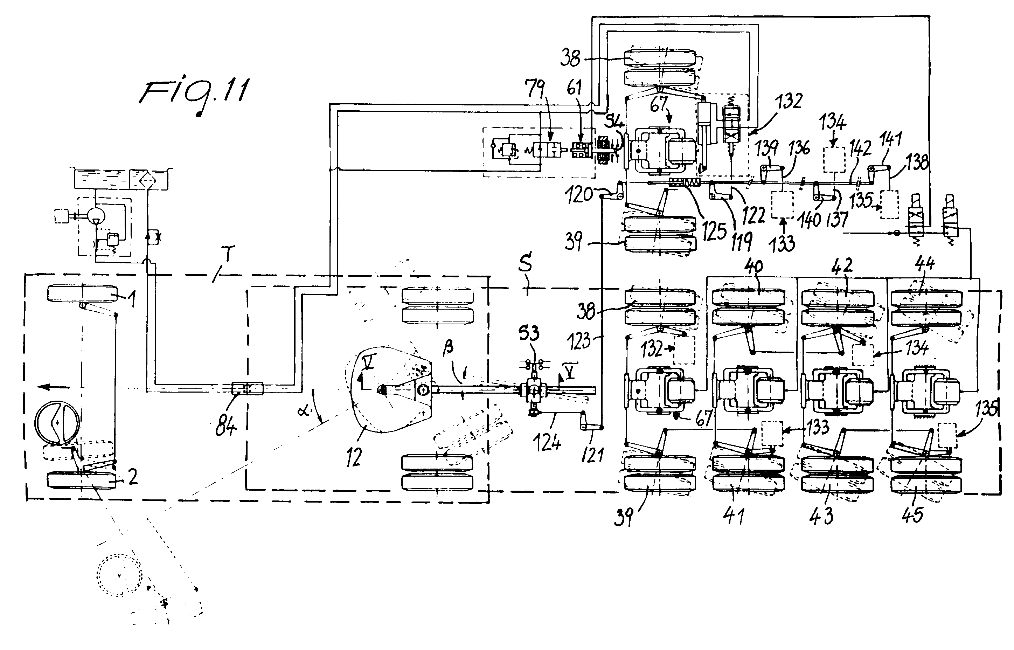

Figure 11 illustrates a further embodiment, with respect to the above figure 9, for the power-assisted actuation of all the rear steerable wheels 38-45 by using, for each steerable axle, the assembly formed by the jack 89 and by the distribution unit 88 which, in the drawing, is enclosed in a rectangle drawn in dashed lines and designated by the reference numeral 132.

A respective assembly 133, 134, and 135, similar to the unit 132, i.e., composed of a jack 89 and of a distribution unit 88, is associated with each rear axle.

The respective distribution units of all the assemblies 132-135 are connected, by means of traction elements 122, 136, 137, and 138 and levers 119, 139, 140, and 141, to a rod 142 connected to the expansion device 125. It is evident that during steering, the action applied to the rod 142 by the rotation of the strut 21 causes the simultaneous actuation of the distribution units and of the jacks of each assembly 132-135 and the steering of the wheels 38-45.

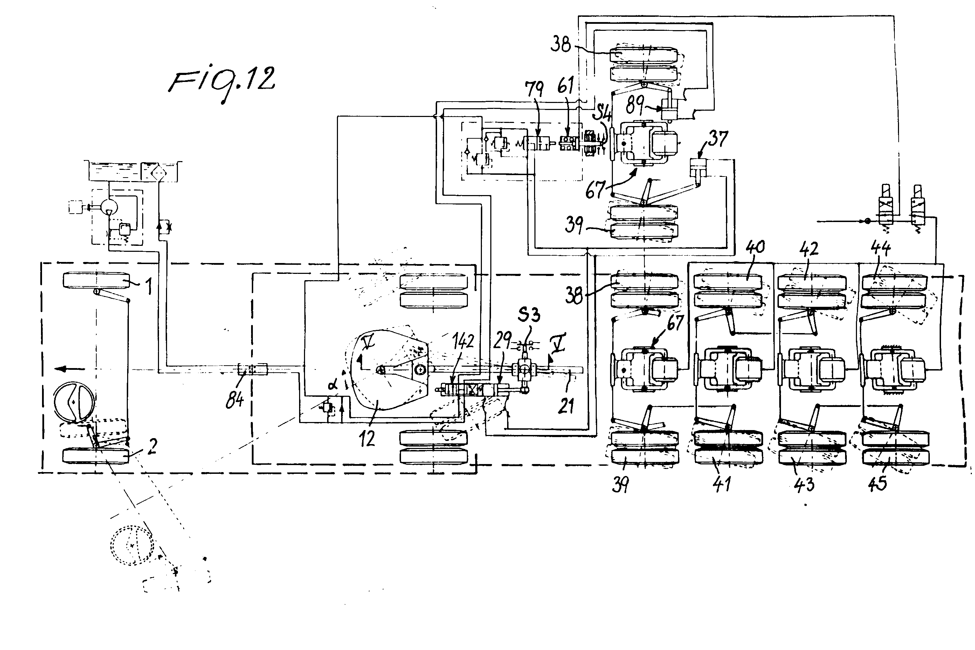

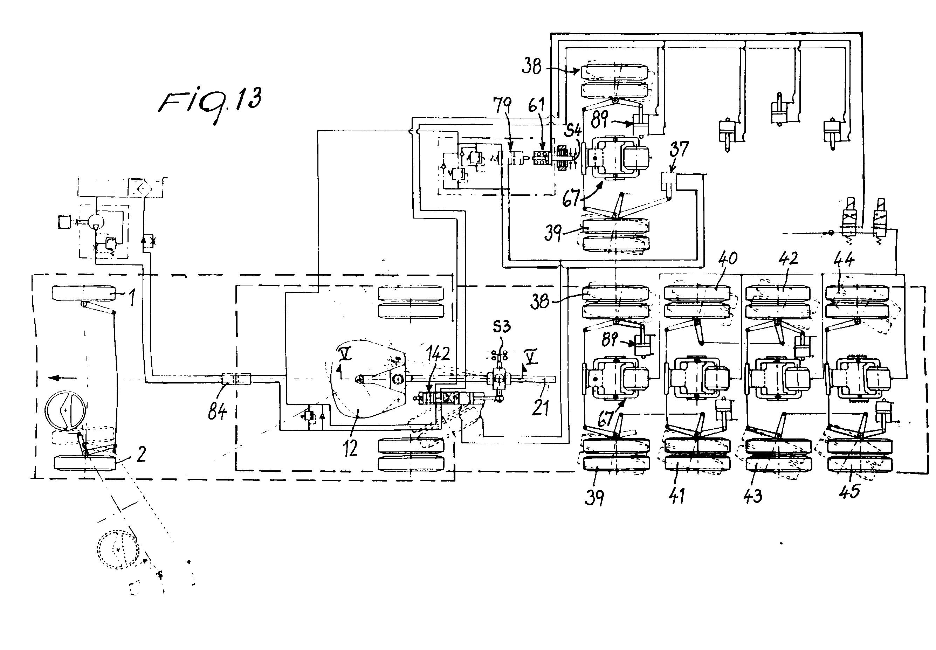

Figures 12 and 13 illustrate an embodiment that is substantially similar to the examples of figures 4 and 10, wherefrom it differs in that the distribution unit 88 (meant to control the jack 89 in the examples of figures 4 and 10) is not associated with the jack 37 but is associated with the jack 29 and is designated by the reference numeral 142. The operating criteria of the system remain nonetheless exactly the same. The invention can also be applied to vehicles such as trucks which have one or more rear axles, one or more whereof has steerable wheels 38 and 39.

In the examples described hereinafter, the same reference numerals have been used for the elements and parts which by analogy are identical to those described above with reference to figures 1-13.

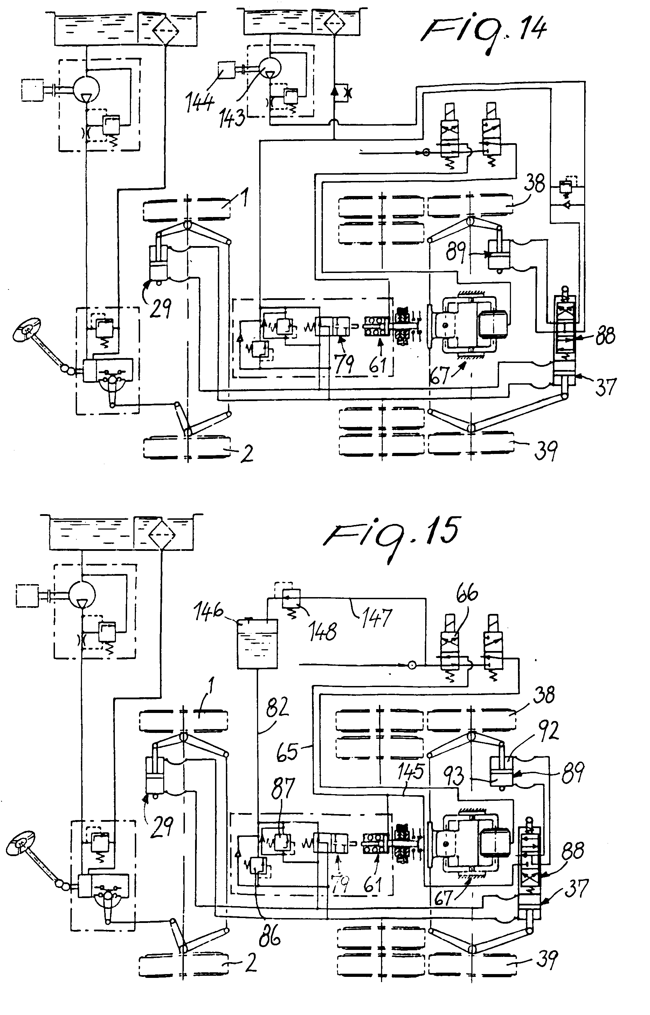

As clearly visible in the example of figure 14, the jack 29 is controlled by the front wheels 1 and 2, so as to detect their steering and produce, by means of the jack 37, a corresponding orientation of the rear wheels 38 and 39.

The consequent movement of the distribution unit 88 connects the jack 89 to an auxiliary pressure source constituted by a pump 143 actuated by a motor 144 (of the internal-combustion or electric type).

The proportioning of the steering system provides for the production of the steering force entirely by means of the jack 89, whilst the jacks 29 and 37 are used as position sensors. In this case, the centering springs of the distribution unit 88 are of the low-load type. By increasing the load of the centering springs and by appropriately modulating the distribution unit 88, the jacks 29 and 37 are allowed to become not only position sensors but also elements having a steering force of their own, with gradually higher values. The sharing of the steering forces between the forces produced by the jacks 29 and 37 and those of the jack 89 can also allow emergency steering if the jack 89 should fail to operate.

The embodiment of figure 15 differs from the one of figure 14 in that compressed air is provided for the actuation of the jack 89. For this purpose, a duct 145 branches off from the duct 65 which, by means of the electric valve 66, is connected to the source of compressed air; said duct 145 is adapted to feed the compressed air to one chamber 92 or to the other chamber 93 of the jack 89, according to the position assumed by the distribution unit 88. The reference numeral 146 designates a compensation reservoir for the oil in the hydraulic circuit of the jacks 29 and 37, which is connected to the source of compressed air by means of a duct 147 along which a pressure regulation valve 148 is arranged.

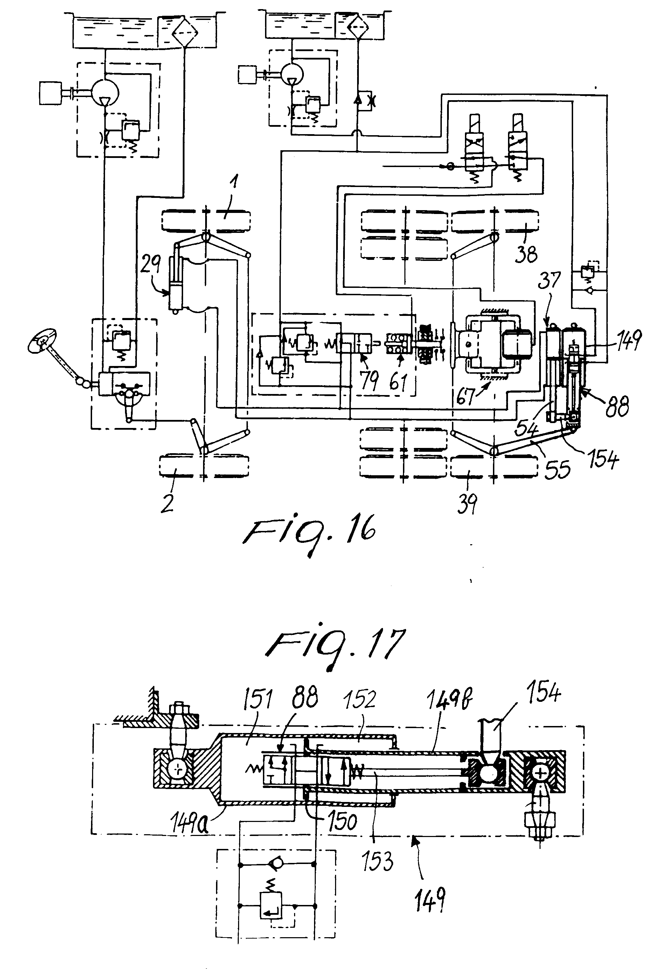

Figure 16 illustrates an example of a system which is similar to the system of figure 14 and is provided with a jack 149 that includes a distribution unit 88 which operates by differential areas, shown in enlarged scale in figure 17.

Said jack 149 is composed of a cylinder 149a, which is rigidly coupled to the beam 46 and in which a tubular stem 149b slides, said stem constituting the body of the distribution unit 88 and being rigidly coupled to the lever 55. A piston 150 is rigidly coupled to the stem 149b and divides the cavity of the cylinder 149a into two chambers 151 and 152. The slide valve 153 of the distribution unit 88 is guided in the tubular stem 149b and is coupled to the stem 54 of the jack 37 by means of a spherical joint 154.

The slide valve 153 is capable of performing limited strokes inside the stem 149b, so as to produce the connection of the chambers 151, 152 to the ducts 83, 96 according to the direction in which the spherical joint 154 moves under the actuation of the stem 54 of the jack 37.

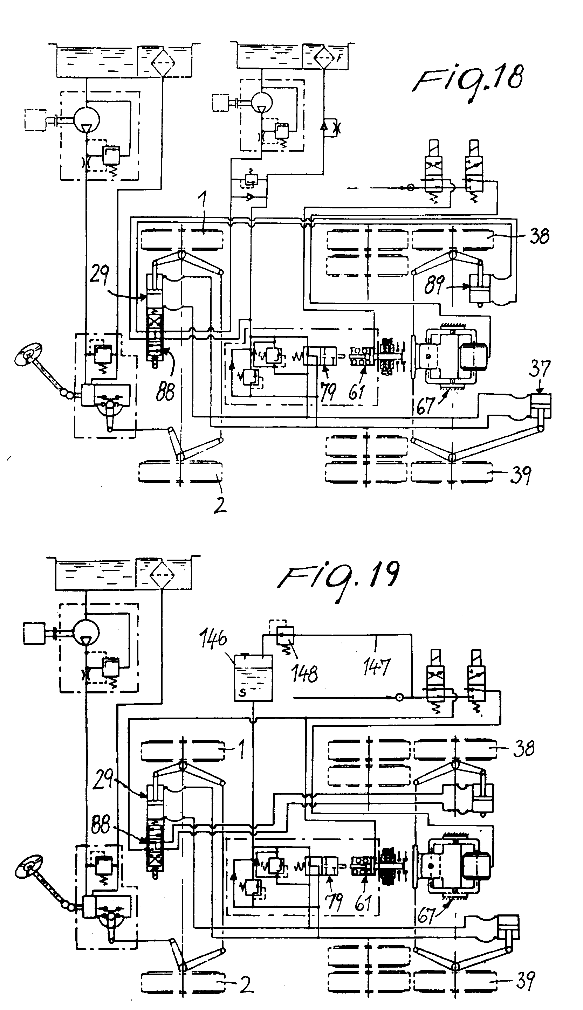

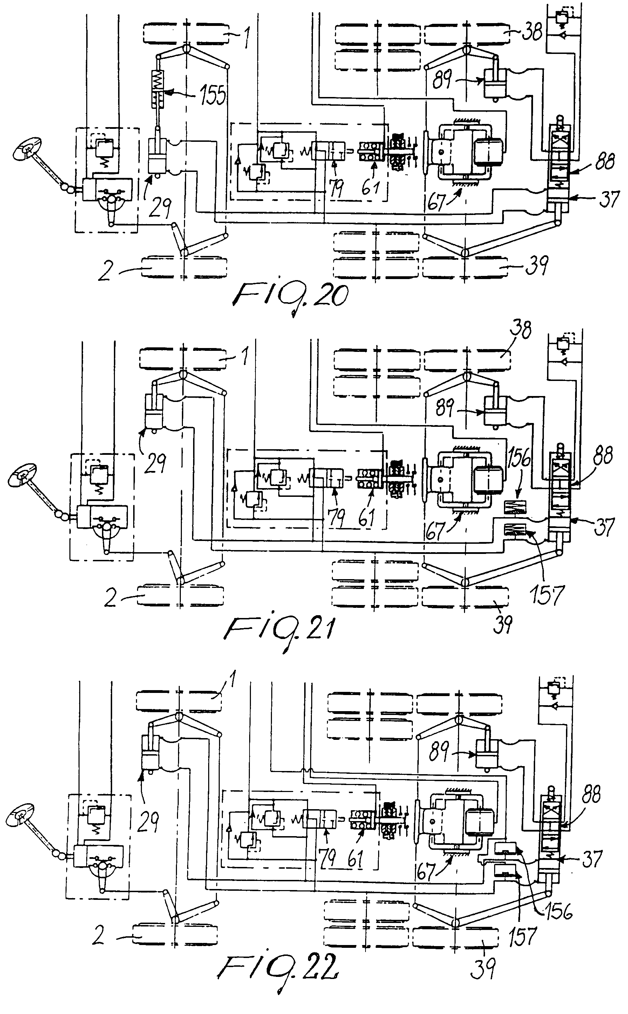

Figures 18 and 19 differently illustrate the embodiments of figures 14 and 15. The distribution unit 88 meant to control the jack 89 is associated with the jack 29, which is actuated by the front wheels 1 and 2.

Figures 20, 21, and 22 illustrate solutions which consist in inserting in the hydrostatic drive system an expansion device which is adapted to neutralize pressure peaks and therefore to avoid the intervention of the pressure limiting valve in case of steering conditions with abnormal loads and impacts requiring a forceful action on the part of the driving cylinders 29, 37 as well.

Figure 20 illustrates a solution that consists in interposing a mechanical expansion device 155 of the spring type between the stem 27 of the jack 29 and the lever to which the stem is connected.

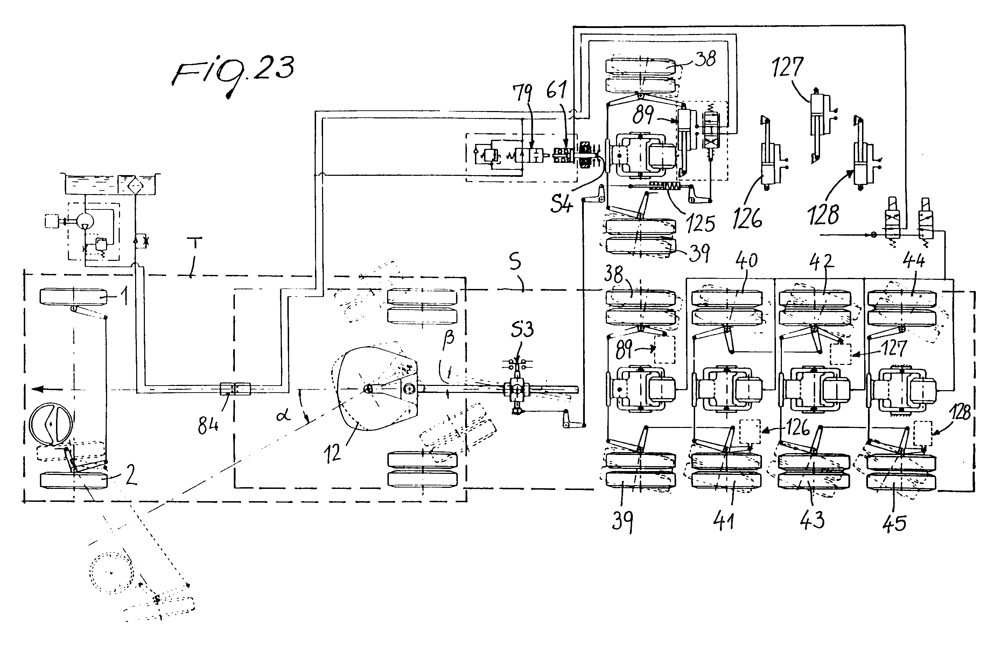

For the same purpose, in the embodiments of figures 21 and 22 there are provided, along the ducts 33 and 34, two respective expansion devices 156 and 157, each whereof is composed of a cylinder in which a piston slides which forms a chamber that is connected to a respective duct 33 and 34. In figure 21, the piston is kept in abutment position by a preloaded spring, whilst in figure 22 the piston is kept in the abutment position by pneumatic pre-loading.

Figure 23 illustrates an embodiment, with respect to the above figure 9, that provides for the power-assisted actuation of the rear wheels 38-45 by means of a jack 126, 127, and 128 for each steerable axle, so that the jacks 126-128 are parallel-connected to the jack 89.

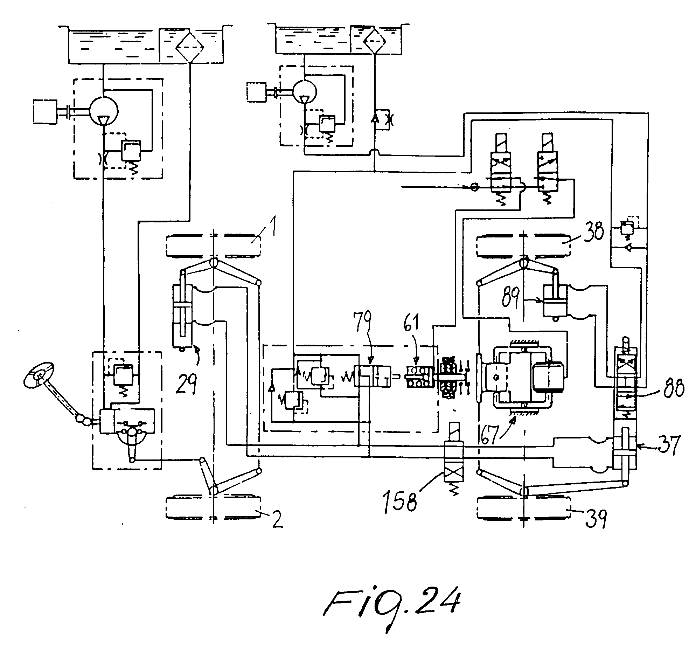

Figure 24 illustrates an embodiment that adopts the invention in a vehicle which has a single rear axle and is therefore adapted to allow steering in opposite or parallel and equally orientated directions of the front wheels with respect to the rear wheels. In the first case concentric travel of the vehicle is obtained; in the second case, the so-called "crab" (sideways travel) is obtained. With respect to the above figure 14, the embodiment of figure 24 provides for the actuation of the rear axle from concentric travel to sideways travel by means of an electric valve 158 adapted to reverse the connections between the chambers 31, 32 of the jack 29 and the chambers 35, 36 of the jack 37. Of course, in this case the chambers of the jacks 29 and 37 will have identical thrust areas.

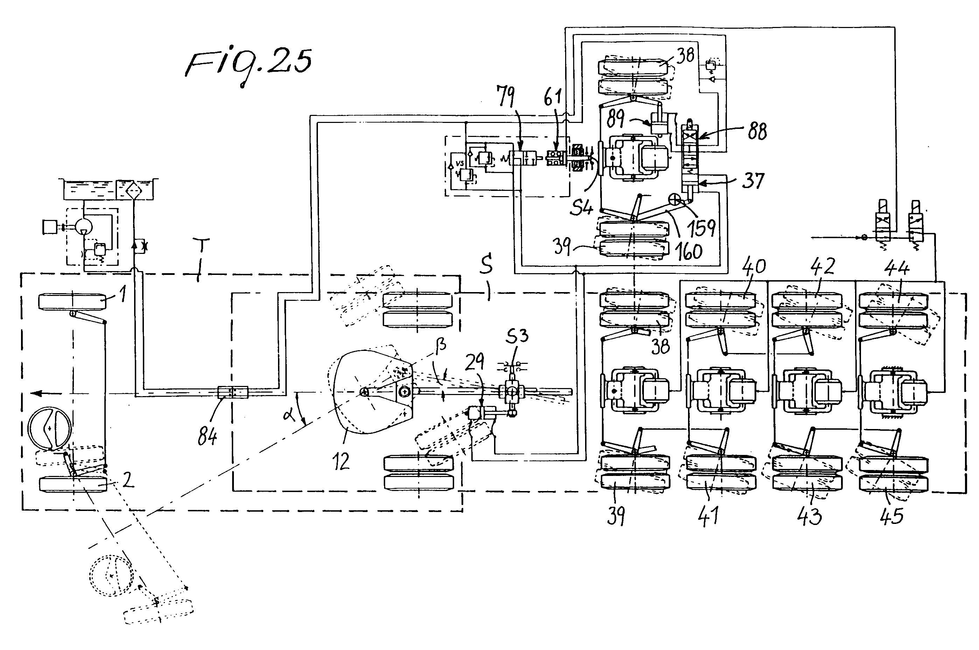

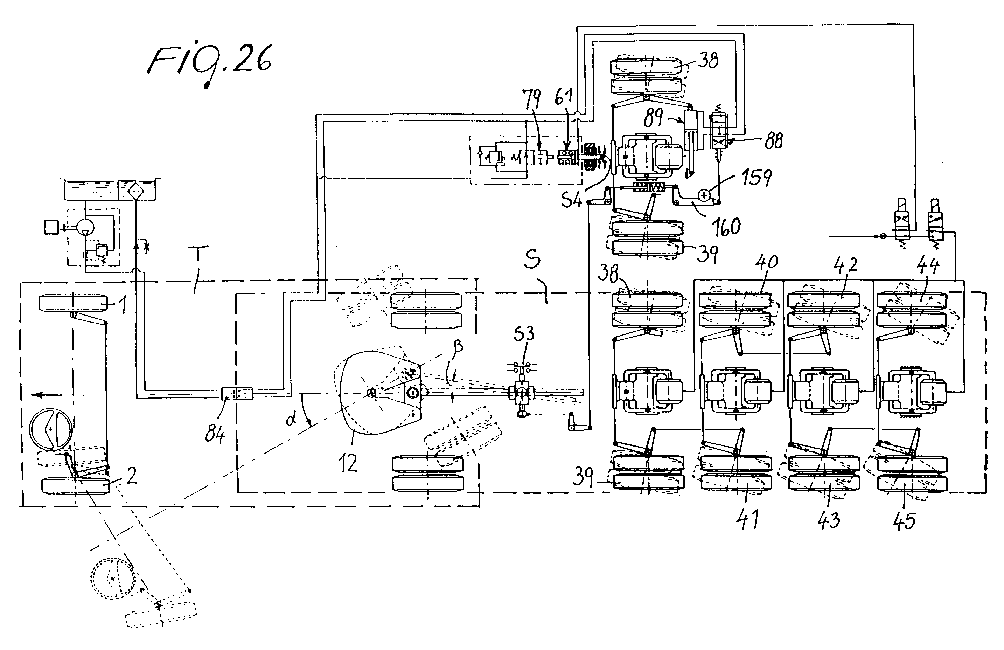

Figures 25 and 26 illustrate, with respect to figures 4, 14, and 9 respectively, two embodiments which provide for the application of an electromechanical actuator 159, which acts on a variable-length arm 160 of the control lever. For example, the actuator can be constituted by a gearmotor and the arm 160 can be of the telescopic type, with a rack-shaped rod that meshes with the pinion of the gearmotor. The gearmotor 159 is driven by a vehicle speed detector, so as to vary the length of the arm of 160 according to a rule which is proportional to the speed of the vehicle. In particular, by increasing or reducing the length of the arm 160 in proportion to the increase and, respectively, decrease in the speed of the vehicle, a corresponding reduction or increase in the maximum steering angle of the rear wheels is expected. In this manner, it is possible to have a wide steering angle at low speeds, so as to privilege the maneuverability of the vehicle, and a limited steering angle at high speeds, so as to privilege the travel stability of the vehicle.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An improvement to a steering system for the steerable wheels (38, 39) of one or more rear axles of a vehicle, such as a truck or semitrailer, wherein the steerable wheels can be orientated by means of an articulated steering parallelogram which is composed of a bar (51) that is parallel to the axle (46) and the ends thereof are articulated to arms (49, 50) rigidly coupled to the wheels, said system comprising a hydraulic actuator which acts on said rear steerable wheels (38, 39) and is connected to a hydraulic pressure source, so as to orientate said wheels in the steering direction and by the intended extent, said hydraulic actuator comprising a first double-action jack (37) provided with a piston which forms two chambers (35, 36) which are connected by means of a hydrostatic circuit to two respective chambers (31, 32) of a second double-action hydraulic jack (29) which is actuated by means (21-26) that are adapted to detect the steering of the vehicle with respect to its straight travel direction, a pneumatic device (67) being provided which is connected to the source of compressed air installed on the vehicle for the alignment and locking of said rear wheels (38, 39) in a centering position that corresponds to the straight travel path of the vehicle by voluntary command or when the vehicle must travel at a speed that is higher than a preset value, characterized in that it comprises a third fluid-actuated jack (89), which acts on the steering parallelogram (49-51) whereon said first hydraulic jack (37) acts and can be connected to a fluid-driven pressure source across a distribution unit (88) which is controlled by said first hydraulic jack (37) or by said second hydraulic jack (89).

2. An improvement to a steering system for the steerable wheels (38, 39) of one or more rear axles of a vehicle, such as a truck or semitrailer, wherein the steerable wheels can be orientated by means of an articulated steering parallelogram composed of a bar (51) which is parallel to the axle (46) and the ends whereof are articulated to arms (49, 50) rigidly coupled to the wheels, said system comprising means (21-26) for detecting the steering of the vehicle with respect to the straight travel direction and a hydraulic actuator which acts on said rear steerable wheels (38, 39) and is connected to a hydraulic pressure source so as to orientate said wheels in the steering direction and by the desired extent, as a function of the steering detected by said means, a pneumatic device (67) being provided which is connected to the source of compressed air installed on the vehicle for the alignment and locking of said rear wheels in the centering position corresponding to the straight travel path of the vehicle by voluntary command or when the vehicle must travel at a speed which is higher than a preset value, characterized in that said hydraulic actuator comprises a double-action jack (89) which can be connected to a pressure source across a distribution unit (88) controlled by said vehicle steering detection means (21-26) by means of a control traction element (120-124) and an expansion device (125) which are series-connected to each other.

3. An improvement to a steering system for an articulated vehicle composed of a tractor (T) and a semitrailer (S), according to claim 1, characterized in that said means for detecting the steering of the steerable wheels comprise a rod-like element (strut 21), which is articulately connected to the tractor (T) and lies substantially in the straight travel direction of the tractor, a sleeve (22) which is guided on said rod-like element (21) and is provided with at least one horizontal arm (tang 24) lying at right angles to said sleeve (22), said sleeve (22) being pivoted about a vertical axis (26) in the loading platform (13) of the semitrailer (S), said arm (24) being connected to the stem (27) of said second hydraulic jack (29) so that steering causes an oscillation of the rod-like element (21) and of said arm (24) and the actuation of said traction element (120-124).

4. An improvement to a steering system for an articulated vehicle composed of a tractor (T) and a semitrailer (S), according to claim 2, characterized in that said means for detecting the steering of the steerable wheels comprise a rod-like element (strut 21), which is articulately connected to the tractor (T) and lies substantially in the straight travel direction of the tractor, a sleeve (22) which is guided on said rod-like element (21) and is provided with at least one horizontal arm (tang 24) lying at right angles to said sleeve (22), said sleeve (22) being pivoted about a vertical axis (26) in the loading platform (13) of the semitrailer (S), said arm (24) being connected to one end of said control traction element (120-124) so that steering causes an oscillation of the rod-like element (21) and of said arm (24) and the actuation of said traction element (120-124).

5. An improvement to a steering system for trucks according to claim 1, characterized in that said second hydraulic jack (29) or said control traction element (120-124) is actuated by the primary steering wheels (1, 2) of the vehicle.

6. An improvement to a steering system for trucks according to claim 2, characterized in that said control traction element (120-124) is actuated by the primary steering wheels (1, 2) of the vehicle.

7. An improvement according to one of the preceding claims, characterized in that in vehicles having a plurality of steerable rear axles, the rear steerable wheels (38-45) are kinematically connected to each other, so as to be orientated simultaneously at the steering angle.

8. An improvement according to claim 7, characterized in that said third jack (89) is associated with each pair of rear steerable wheels.

9. An improvement according to one of claims 1 and 3-8, characterized in that hydraulic expansion devices (146) are arranged along the ducts that interconnect the chambers of said first jack (37) and of said second jack (29).

10. An improvement to a steering system for trucks having a front and a rear steerable axles, according to one of claims 1 and 5-8, characterized in that said first jack (37) and said second jack (29) have mutually identical thrust areas and in that the ducts of said jacks can be interconnected in a normal arrangement and in a reversed arrangement by means of an electric valve (158), so as to cause the steering of the vehicle in a concentric or in a so-called "crab" (sideways travel) manner.

11. An improvement according to one of claims 1, 2 and 3-7, characterized in that it comprises an actuation lever (160) of adjustable length which acts on the parallelogram (49-51) for the orientation of the steerable wheels (38, 39) and an electromechanical actuator (159) which acts on said lever (160) so as to vary its length in proportion to the speed of the vehicle, so as to cause a corresponding reduction in the steering angle of the vehicle as speed increases.

12. An improvement according to one of claims 1, 2 and 3-7, characterized in that it comprises a control lever (160) of adjustable length, which acts on the hydraulic control of said third jack (89), and an electromechanical actuator (159), which acts on said lever (160) so as to vary its length in proportion to the speed of the vehicle, so as to cause a corresponding reduction in the steering angle of the vehicle as speed increases.
